# EUROPÄISCHE PATENTANMELDUNG

(11) **EP 4 395 234 A1**
(43) Veröffentlichungstag der Anmeldung: **03.07.2024**
(21) Anmeldenummer: 22217198.5
(22) Anmeldetag: 29.12.2022
(51) Int. Cl.: H04L 9/40, G06F 21/53, G05B 19/00

(54) **VERFAHREN ZUM BETRIEB EINES AUTOMATISIERUNGSGERÄTS, SYSTEM UND STEUERUNGSPROGRAMM**

(71) Anmelder: Siemens Aktiengesellschaft, 80333 München (DE)
(72) Erfinder: Haasch, Axel, 91056 Erlangen (DE); Männer, Andres, 09236 Claußnitz OT Diethensdorf (DE)
(74) Vertreter: Siemens Patent Attorneys

(57) **Zusammenfassung**

Durch eine mit einem Automatisierungsgerät (200) verbundene Rechnereinrichtung (100) werden Steuerungsanwendungen für das Automatisierungsgerät mittels Ablaufsteuerungskomponenten (131-133) bereitgestellt, die in eine auf der Rechnereinrichtung installierte Ablaufsteuerungsumgebung (112) ladbar und dort ausführbar sind. Im Automatisierungsgerät ist eine Sicherheitsrichtlinie (201) gespeichert, die nur nach einer erfolgreichen Authentifizierung anhand eines einem Hersteller (1) des Automatisierungsgeräts zugeordneten Berechtigungsnachweises (10) änderbar ist. Vor einem Start der jeweiligen Ablaufsteuerungskomponente werden Konfigurationsinformationen (312, 322, 332) durch die Rechnereinrichtung gegen die Sicherheitsrichtlinie geprüft bzw. entsprechend der Sicherheitsrichtlinie angepasst. Die Ablaufsteuerungskomponenten werden jeweils entsprechend den geprüften bzw. angepassten Konfigurationsinformationen in die Ablaufsteuerungsumgebung geladen und dort ausgeführt.

## Beschreibung

Die vorliegende Erfindung betrifft ein Verfahren zum Betrieb eines Automatisierungsgeräts, insbesondere einer Produktions- oder Werkzeugmaschine, sowie ein System und ein Steuerungsprogramm zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus EP 3 650 968 A1 ist ein Verfahren zum Betrieb einer Produktions- oder Werkzeugmaschine bekannt, bei dem eine zumindest einen virtuellen Container umfassenden App zusammen mit einer App-Konfiguration aus einem entfernten Speicher in einen Speicher der Produktions- oder Werkzeugmaschine heruntergeladen wird. Dabei wird ein unmittelbarer Start der heruntergeladenen App auf der Produktions- oder Werkzeugmaschine verhindert. Zunächst wird die App-Konfiguration der heruntergeladenen App automatisch modifiziert. Hierzu werden von der App-Konfiguration umfasste Bezeichner ausgewertet und mit von einer Positivliste bzw. einer Negativliste umfassten Bezeichnern verglichen. Ein weder in der Positivliste noch in der Negativliste enthaltener Bezeichner wird durch einen automatisch ausgewählten oder automatisch generierten Zielausdruck ersetzt. Nach dem Modifizieren der App-Konfiguration wird die heruntergeladene App automatisch gestartet.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Aus der älteren europäischen Patentanmeldung mit dem Anmeldeaktenzeichen 22 177 736.0 ist ein Verfahren zur Bereitstellung von Steuerungsanwendungen mittels Ablaufsteuerungskomponenten für Steuerungsanwendungen bekannt, deren Ausführung ausgewählte Privilegien erfordert. Hierzu wird jeweils eine Spezifikation benötigter sicherheitskritischer Ressourcen erstellt. Anhand der Spezifikationen wird jeweils eine zusätzliche Ablaufsteuerungskomponente ermittelt, die für eine Bereitstellung eines Zugriffs auf die benötigten sicherheitskritischen Ressourcen vorgesehen ist. Dementsprechend wird eine Ausführung der jeweiligen Ablaufsteuerungskomponente gemeinsam mit der zusätzlichen Ablaufsteuerungskomponente gestartet. Durch eine Ablaufsteuerungsumgebung wird eine Schnittstelle zur Interprozesskommunikation zwischen der jeweiligen Ablaufsteuerungskomponente und der zusätzlichen Ablaufsteuerungskomponente eingerichtet. Der Zugriff auf die jeweils benötigten sicherheitskritischen Ressourcen wird mittels Interprozesskommunikation zwischen der jeweiligen Ablaufsteuerungskomponente und der zusätzlichen Ablaufsteuerungskomponente bereitgestellt.

In der älteren europäischen Patentanmeldung mit dem Anmeldeaktenzeichen 22 215 322.3 ist ein Verfahren zum Betrieb einer Produktions- oder Werkzeugmaschine bekannt, die eine Steuerung zur Steuerung von Aktoren der Produktions- oder Werkzeugmaschine und zumindest eine App zur Bereitstellung von Zusatzfunktionalitäten für die Produktions- oder Werkzeugmaschine umfasst. Die App wird während des Betriebs der Produktions- oder Werkzeugmaschine durch ein externes App-Managementsystem verwaltet. Bei Vorliegen eines vordefinierten Betriebszustandes der Produktions- oder Werkzeugmaschine wird eine Verwaltungsmaßnahme des App-Managementsystems in Bezug auf die App verhindert.

Aufgrund einer zunehmend flexibleren funktionalen Ausgestaltung von industriellen Automatisierungsgeräten werden verstärkt in Automatisierungsgeräte nachladbare Steuerungsanwendungen genutzt. Diese Steuerungsanwendungen können beispielsweise mittels Container-Virtualisierung verfügbar gemacht werden. In industriellen Automatisierungssystem bestehen üblicherweise hohe Anforderungen hinsichtlich einer aufwandsarmen und funktional sicheren Integration industrieller Steuerungsanwendungen.

In industriellen Automatisierungssystemen ist es äußerst wichtig, zweifelsfrei feststellen zu können, ob Automatisierungsgeräte einem herstellerseitig vorgesehenen Zustand entsprechen oder infolge durch Anlagenbetreiber nachträglich installierter Steuerungsanwendungen Informations- oder Betriebssicherheitsrisiken darstellen. Insbesondere gilt es, unzulässige Änderungen an Software bzw. Firmware ausschließen zu können. Dies muss auch dann gewährleistet sein, wenn Anlagenbetreiber vollumfängliche Zugriffsrechte für die Automatisierungsgerät haben, herstellerseitig dagegen keine oder nur eingeschränkte Zugriffsmöglichkeiten bestehen.

*Unabhängig vom grammatikalischen Geschlecht eines bestimmten Begriffes sind Personen mit männlicher, weiblicher oder anderer Geschlechteridentität mit umfasst.*

Der vorliegenden Erfindung liegt die Aufgabe zugrunde, ein gegenüber Manipulationen sicheres, aufwandsarm realisierbares Verfahren zum Betrieb eines Automatisierungsgeräts, für das Steuerungsanwendungen insbesondere mittels Container-Virtualisierung bereitgestellt werden, zu schaffen sowie eine geeignete Implementierung zur Durchführung des Verfahrens anzugeben.

Diese Aufgabe wird erfindungsgemäß durch ein Verfahren mit den in Anspruch 1 angegebenen Merkmalen, durch ein System mit den in Anspruch 12 angegebenen Merkmalen und durch ein Steuerungsprogramm mit den in Anspruch 13 angegebenen Merkmalen gelöst. Vorteilhafte Weiterbildungen sind in den abhängigen Ansprüchen angegeben.

Entsprechend dem erfindungsgemäßen Verfahren zum Betrieb eines Automatisierungsgeräts werden durch eine mit dem Automatisierungsgerät verbundene Rechnereinrichtung Steuerungsanwendungen für das Automatisierungsgerät mittels Ablaufsteuerungskomponenten bereitgestellt. Die Ablaufsteuerungskomponenten sind in eine auf der Rechnereinrichtung installierte Ablaufsteuerungsumgebung ladbar und dort ausführbar. Für die Ablaufsteuerungskomponenten sind jeweils Konfigurationsinformationen vorgegeben, die zumindest für die jeweilige Ablaufsteuerungskomponente angeforderte Berechtigungen bzw. Ressourcen umfassen. Die angeforderten Berechtigungen bzw. Ressourcen können beispielsweise Dateisystem- bzw. Firewall-Freigaben umfassen.

Mittels der Steuerungsanwendungen werden vorteilhafterweise Funktionen des Automatisierungsgeräts bereitgestellt bzw. gesteuert. Hierzu zählen insbesondere eine Erfassung, Aggregierung und Vorverarbeitung von Prozess- oder Maschinendaten sowie deren Weiterleitung an Cloud-Rechnersysteme für weitergehende Analysen. Vorzugsweise laufen die Ablaufsteuerungskomponenten innerhalb der Ablaufsteuerungsumgebung isoliert voneinander ab und nutzen gemeinsam einen Betriebssystemkern der Rechnereinrichtung. Dabei ist die Ablaufsteuerungsumgebung auf einem Betriebssystem der Rechnereinrichtung installiert.

Insbesondere können die Ablaufsteuerungskomponenten Software-Container, WebAssembly- oder Java Bytecode sein bzw. umfassen. Darüber hinaus können die Ablaufsteuerungskomponenten auch Container-Gruppen umfassen, beispielsweise Pods. Grundsätzlich können für die Ablaufsteuerungskomponenten auch alternative Micro-Virtualisierungskonzepte, wie Snaps, verwendet werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft. Grundsätzlich können auch andere (orchestrierte) Container-Laufzeitumgebungen, wie podman oder Kubernetes, verwendet werden. Alternativ zu einer Container-Laufzeitumgebung kann für die Ablaufsteuerungsumgebung auch eine WebAssembly-Laufzeitumgebung oder eine Java Virtual Machine verwendet werden.

Im Automatisierungsgerät ist erfindungsgemäß eine Sicherheitsrichtlinie gespeichert, die nur nach einer erfolgreichen Authentifizierung anhand eines einem Hersteller des Automatisierungsgeräts zugeordneten Berechtigungsnachweises änderbar ist. Der dem Hersteller des Automatisierungsgeräts zugeordnete Berechtigungsnachweis kann beispielsweise zumindest einen kryptographischen Hardware- bzw. Software-Schlüssel umfassen. Erfindungsgemäß werden die Konfigurationsinformationen durch die Rechnereinrichtung vor einem Start der jeweiligen Ablaufsteuerungskomponente gegen die Sicherheitsrichtlinie geprüft bzw. entsprechend der Sicherheitsrichtlinie angepasst. Die Ablaufsteuerungskomponenten werden jeweils entsprechend den geprüften bzw. angepassten Konfigurationsinformationen in die Ablaufsteuerungsumgebung geladen und dort ausgeführt. Vorzugsweise werden die geprüften bzw. angepassten Konfigurationsinformationen jeweils für ein Laden bzw. eine Ausführung der jeweiligen Ablaufsteuerungskomponente verwendet.

Die vorliegende Erfindung ermöglicht eine sichere Integration von Cloud bzw. Edge Computing-Konzepten in Automatisierungsgeräte, insbesondere komplexe Werkzeugmaschinen, indem Steuerungs- bzw. Zusatzfunktionen entsprechend einer auf dem jeweiligen Automatisierungsgerät gespeicherten Sicherheitsrichtlinie bereitgestellt werden, die grundsätzlich nur mit herstellerseitiger Autorisierung änderbar ist. Speziell bei bestehenden Automatisierungsgeräten können Steuerungs- bzw. Zusatzfunktionen im Rahmen von Sicherheitsrichtlinien mittels einer mit dem jeweiligen Automatisierungsgerät verbundenen Rechnereinrichtung betreiberseitig flexibel ergänzt werden.

Vorteilhafterweise wird anhand der geprüften bzw. angepassten Konfigurationsinformationen jeweils ein Berechtigungsprofil für einen Zugriff auf die angeforderten Berechtigungen bzw. Ressourcen erstellt oder referenziert. Durch die Berechtigungsprofile werden hinsichtlich der angeforderten Berechtigungen bzw. Ressourcen jeweils zulässige bzw. unzulässige Operationen in der Rechnereinrichtung festgelegt. Auf diese Weise kann insbesondere ein rollenbasierter Zugriffsschutz effizient und zuverlässig realisiert werden.

Entsprechend einer bevorzugten Ausgestaltung der vorliegenden Erfindung wird den Ablaufsteuerungskomponenten ohne Prüfung der jeweiligen Konfigurationsinformationen gegen die im Automatisierungsgerät gespeicherte Sicherheitsrichtlinie zumindest kein Zugriff auf das Automatisierungsgerät bzw. kein Kommunikationsnetz-Zugriff eingeräumt. Darüber hinaus werden für ein Laden bzw. eine Ausführung von Ablaufsteuerungskomponenten verwendete Konfigurationsinformationen nach einer Änderung der im Automatisierungsgerät gespeicherten Sicherheitsrichtlinie vorteilhafterweise erneut gegen die Änderungen geprüft bzw. entsprechend den Änderungen angepasst. Dabei werden von der Änderung der Sicherheitsrichtlinie betroffene Ablaufsteuerungskomponenten selektiv gestoppt und mit den erneut geprüften bzw. angepassten Konfigurationsinformationen wieder gestartet. Somit ist einerseits ein flexibler Betrieb des Automatisierungsgeräts durch Anpassung der Sicherheitsrichtlinie möglich. Andererseits ist eine konsistente, zielgerichtete Anwendung einer geänderten Sicherheitsrichtlinie gewährleistet.

Entsprechend einer bevorzugten Ausführungsform der vorliegenden Erfindung erfasst ein einem Betreiber des Automatisierungsgeräts zugeordnetes Orchestrierungssystem ein Anlegen, ein Löschen bzw. eine Änderung der Ablaufsteuerungskomponenten und registriert die Steuerungsanwendungen mit ihrem jeweiligen Ausführungsstatus. Insbesondere umfasst das Anlegen, das Löschen bzw. die Änderung der Ablaufsteuerungskomponenten jeweils ein Allokieren oder Freigeben von Ressourcen der Rechnereinrichtung. Dies ermöglicht eine besonders effiziente und zuverlässige Verwaltung der Steuerungsanwendungen.

Das erfindungsgemäße Steuerungsprogramm ist in einen Arbeitsspeicher einer Rechnereinrichtung ladbar sowie durch einen Prozessor der Rechnereinrichtung verarbeitbar und weist zumindest einen Codeabschnitt auf, bei dessen Ausführung vorangehend beschriebene Verfahrensschritte ausgeführt werden, wenn das Steuerungsprogramm in der Rechnereinrichtung abläuft.

Das erfindungsgemäße System ist zur Durchführung eines Verfahrens entsprechend vorangehenden Ausführungen vorgesehen und umfasst zumindest ein Automatisierungsgerät, zumindest eine mit dem Automatisierungsgerät verbundene Rechnereinrichtung sowie eine auf der Rechnereinrichtung installierte Ablaufsteuerungsumgebung. Außerdem ist eine im Automatisierungsgerät gespeicherte Sicherheitsrichtlinie vorgesehen, die nur nach einer erfolgreichen Authentifizierung anhand eines einem Hersteller des Automatisierungsgeräts zugeordneten Berechtigungsnachweises änderbar ist.

Die Rechnereinrichtung des erfindungsgemäßen Systems ist dafür ausgestaltet und eingerichtet, Steuerungsanwendungen für das Automatisierungsgerät mittels Ablaufsteuerungskomponenten bereitzustellen, die in die Ablaufsteuerungsumgebung ladbar und dort ausführbar sind. Dabei sind für die Ablaufsteuerungskomponenten jeweils Konfigurationsinformationen vorgegeben, die zumindest für die jeweilige Ablaufsteuerungskomponente angeforderte Berechtigungen bzw. Ressourcen umfassen. Ferner ist die Rechnereinrichtung dafür ausgestaltet und eingerichtet, die Konfigurationsinformationen vor einem Start der jeweiligen Ablaufsteuerungskomponente gegen die Sicherheitsrichtlinie zu prüfen bzw. entsprechend der Sicherheitsrichtlinie anzupassen. Dementsprechend ist die Rechnereinrichtung zusätzlich dafür ausgestaltet und eingerichtet, die Ablaufsteuerungskomponenten jeweils entsprechend den geprüften bzw. angepassten Konfigurationsinformationen in die Ablaufsteuerungsumgebung zu laden und dort auszuführen.

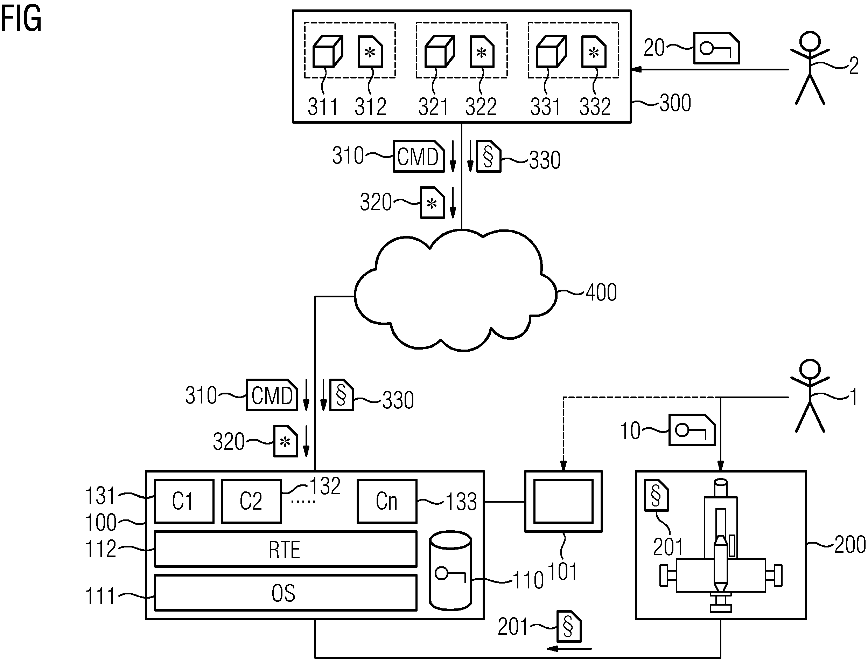

Die vorliegende Erfindung wird nachfolgend an einem Ausführungsbeispiel anhand der Zeichnung näher erläutert. Es zeigt die
- Figur: ein System mit einem Automatisierungsgerät und einer Rechnereinrichtung zur Bereitstellung von Steuerungsanwendungen für das Automatisierungsgerät.

Das in der Figur dargestellte System umfasst eine Rechnereinrichtung 100 zur Bereitstellung von Steuerungsanwendungen eines industriellen Automatisierungssystems mittels Ablaufsteuerungskomponenten 131-133, die im vorliegenden Ausführungsbeispiel durch Software-Container implementiert sind. Die Steuerungsanwendungen des industriellen Automatisierungssystems sind exemplarisch für zeitkritische Dienste und können auch Überwachungsfunktionen umfassen.

Die Rechnereinrichtung 100 kann mittels der Steuerungsanwendungen beispielsweise Funktionen von Automatisierungsgeräten, wie Produktions- oder Werkzeugmaschinen oder speicherprogrammierbaren Steuerungen, oder von Feldgeräten, wie Sensoren oder Aktoren, implementieren. Auf diese Weise kann die Rechnereinrichtung 100 insbesondere für einen Austausch von Steuerungs- und Messgrößen mit einer Produktions- oder Werkzeugmaschine 200 genutzt werden, mit der die Rechnereinrichtung 100 verbunden ist.

Alternativ oder zusätzlich kann die Rechnereinrichtung 100 als Edge Box oder Cloud Connector für das Automatisierungsgerät 200 dienen. In diesem Fall übernimmt die Rechnereinrichtung 100 beispielsweise eine Erfassung, Aggregierung bzw. Vorverarbeitung von Prozess- oder Maschinendaten und sendet diese an ein Cloud-Rechnersystem für weitergehende Analysen. Im Automatisierungsgerät 200 ist eine herstellerseitige Sicherheitsrichtlinie 201 gespeichert, die nur nach einer erfolgreichen Authentifizierung anhand eines einem Hersteller 1 des Automatisierungsgeräts 200 zugeordneten Berechtigungsnachweises 10 änderbar ist. Der dem Hersteller 1 des Automatisierungsgeräts 200 zugeordnete Berechtigungsnachweis 10 umfasst beispielsweise einen kryptographischen Hardware- bzw. Software-Schlüssel. Durch die herstellerseitige Sicherheitsrichtlinie 201 werden insbesondere Zugriffsrechte und zulässige bzw. unzulässige Operationen in Bezug auf das Automatisierungsgerät 200 festgelegt.

Darüber hinaus kann die Rechnereinrichtung 100 mittels der Steuerungsanwendungen Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann die Rechnereinrichtung 100 zur Anzeige von Werten eines Regelungskreises und zur Veränderung von Regelungsparametern oder -programmen verwendet werden. Hierzu umfasst die Rechnereinrichtung 100 im vorliegenden Ausführungsbeispiel eine Anzeigeeinheit 101.

Außerdem umfasst das in der Figur dargestellte System ein Orchestrierungssystem 300, das ein Anlegen, ein Löschen bzw. eine Änderung der Ablaufsteuerungskomponenten erfasst und die Steuerungsanwendungen mit ihrem jeweiligen Ausführungsstatus registriert. Hierzu stellt das Orchestrierungssystem 300 für Steuerungsanwendungen jeweils zumindest ein Speicherabbild (Image) 311, 321, 331 für einen Software-Container sowie zugehörige Konfigurationsinformationen 312, 322, 332 insbesondere an die Rechnereinrichtung 100 bereit. Die Konfigurationsinformationen 312, 322, 332 umfassen insbesondere für die jeweilige Ablaufsteuerungskomponente angeforderte Berechtigungen bzw. Ressourcen. Die angeforderten Berechtigungen bzw. Ressourcen können beispielsweise Dateisystem- oder Firewall-Freigaben betreffen.

Vorzugsweise ist ein Orchestrierungssystem 300 für mehrere Rechnereinrichtungen vorgesehen, die mittels Software-Containern Steuerungsanwendungen bereitstellen. Das Orchestrierungssystem 300 ist entsprechend der Figur über ein Ethernetbasiertes Kommunikationsnetz 400 mit der Rechnereinrichtung 100 verbunden und einem Betreiber 2 des industriellen Automatisierungssystems zugeordnet. Für einen Zugriff auf das Orchestrierungssystem 300 bzw. auf diesem zugeordnete Rechnereinrichtungen ist im vorliegenden Ausführungsbeispiel betreiberseitig ein entsprechender Berechtigungsnachweis 20 erforderlich.

Das Anlegen, das Löschen bzw. die Änderung der Ablaufsteuerungskomponenten umfasst jeweils ein Allokieren oder Freigeben von Ressourcen der Rechnereinrichtung 100. Dies wird mittels an die Rechnereinrichtung 100 übermittelter Steuerungsbefehle 310 und Konfigurationsinformationen 320 durch das Orchestrierungssystem 300 gesteuert. Zusätzlich können vom Orchestrierungssystem 300 optionale betreiberseitige Sicherheitsrichtlinien 330 an die dem Orchestrierungssystem 300 zugeordneten Rechnereinrichtungen zur Umsetzung verteilt werden. Die Konfigurationsinformationen 320 sind vorzugsweise Deployment-Informationen, beispielsweise docker-compose.yml-Konfigurationsdateien. Insbesondere umfassen die Konfigurationsinformationen 320 jeweils zusätzlich zu einer Angabe eines Speicherabbilds für den jeweiligen Software-Container sowie den angeforderten Berechtigungen bzw. Ressourcen anwendungsspezifische Vorgaben.

Anhand von Signaturen für die Speicherabbilder 311, 321, 331 und für die Konfigurationsinformationen 312, 322, 332 wird vorzugsweise eine Authentizität der Speicherabbilder 311, 321, 331 und Konfigurationsinformationen 312, 322, 332 überprüft, beispielsweise durch den Betreiber 2 des industriellen Automatisierungssystems oder automatisch durch das Orchestrierungssystem 300. Darüber hinaus kann überprüft werden, dass innerhalb der Speicherabbilder 311, 321, 331 bzw. Konfigurationsinformationen 312, 322, 332 abhängig von der jeweiligen Signatur nur definierte bzw. zulässige Parameter gesetzt sind. Dementsprechend werden nicht-konforme Speicherabbilder 311, 321, 331 bzw. Konfigurationsinformationen 312, 322, 332 nicht für eine Verwendung zugelassen.

Auf einem Betriebssystem 111 der Rechnereinrichtung 100 ist eine Ablaufsteuerungsumgebung 112 als Betriebssystem-Anwendung installiert. Die Software-Container bzw. Ablaufsteuerungskomponenten 131-133 können in diese Ablaufsteuerungsumgebung 112 geladen und dort ausgeführt werden. Grundsätzlich können Ablaufsteuerungskomponenten 131-133 jeweils von der Rechnereinrichtung 100 auf einen anderen Host zur dortigen Ausführung migriert bzw. auf mehreren Hosts zeitgleich ausgeführt werden.

Im vorliegenden Ausführungsbeispiel laufen die Software-Container jeweils von anderen Software-Containern, Container-Gruppen bzw. Pods isoliert innerhalb der Ablaufsteuerungsumgebung 112 auf dem Betriebssystem 111 der Rechnereinrichtung 100 ab. Dabei nutzen die Software-Container jeweils gemeinsam mit anderen auf der Rechnereinrichtung 100 ablaufenden Software-Containern einen bzw. denselben Kernel des Betriebssystems 111. Die Ablaufsteuerungsumgebung 112 ist vorzugsweise eine Container-Laufzeitumgebung bzw. Container-Engine. Alternativ zu Software-Containern können die Ablaufsteuerungskomponenten beispielsweise WebAssembly- oder Java Bytecode sein. In diesem Fall ist die Ablaufsteuerungsumgebung 112 eine WebAssembly-Laufzeitumgebung oder eine Java Virtual Machine.

Eine Isolation der Software-Container bzw. eine Isolation von ausgewählten Betriebssystemmitteln untereinander kann insbesondere mittels Control Groups und Namespaces realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden, indem Ressourcen des Kernels des Betriebssystems virtualisiert werden.

Die Ablaufsteuerungskomponenten 131-133 werden vorzugsweise durch das Orchestrierungssystem 300 anhand der Konfigurationsinformationen 312, 322, 332 insbesondere hinsichtlich der jeweils angeforderten Berechtigungen bzw. Ressourcen klassifiziert. In Abhängigkeit einer solchen Klassifizierung kann beispielsweise die für die jeweilige Ablaufsteuerungskomponente 131-133 anzuwendende betreiberseitige Sicherheitsrichtlinie 330 ausgewählt werden. Mögliche weitere Aspekte für die Klassifizierung können
- Signaturen von Deployment-Informationen oder Images,
- eine Bereitstellung von definierten Verzeichnissen oder Dateien eines Hosts an eine Instanz einer Ablaufsteuerungskomponente im Rahmen eines Mount-Vorgangs bei einem Start der Instanz,
- in Deployment-Informationen oder Images zugewiesene Labels, Prozessprivilegien bzw. Namespaces, insbesondere Namespaces, die mit einem Host oder anderen Containern geteilt werden,
sein. Klassifizierungskriterien können grundsätzlich in beliebiger Form miteinander verknüpft werden. Im vorliegenden Ausführungsbeispiel werden die jeweils anzuwendenden betreiberseitigen Sicherheitsrichtlinien 330 in einer Datenbank 110 der Rechnereinrichtung 100 gespeichert und können beispielsweise durch den Hersteller 1 des Automatisierungsgeräts 200 über die Anzeigeeinheit 101 oder eine Remote Terminal-Sitzung kontrolliert werden.

Die vom Orchestrierungssystem 300 übermittelten Konfigurationsinformationen 320 werden durch die Rechnereinrichtung 100 vor einem Start der jeweiligen Ablaufsteuerungskomponente 131-133 gegen die im Automatisierungsgerät 200 gespeicherte herstellerseitige Sicherheitsrichtlinie 201 geprüft bzw. entsprechend dieser Sicherheitsrichtlinie 201 angepasst. Dementsprechend werden die Ablaufsteuerungskomponenten 131-133 jeweils entsprechend den geprüften bzw. angepassten Konfigurationsinformationen in die Ablaufsteuerungsumgebung 112 geladen und dort ausgeführt. Insbesondere werden die geprüften bzw. angepassten Konfigurationsinformationen jeweils für ein Laden bzw. eine Ausführung der jeweiligen Ablaufsteuerungskomponente 131-133 verwendet. Ohne Prüfung der jeweiligen Konfigurationsinformationen 320 gegen die im Automatisierungsgerät 200 gespeicherte herstellerseitige Sicherheitsrichtlinie 201 wird den Ablaufsteuerungskomponenten 131-133 vorzugsweise zumindest kein Zugriff auf das Automatisierungsgerät 200 und das Kommunikationsnetz 400 eingeräumt.

Nach einer Änderung der im Automatisierungsgerät 200 gespeicherten herstellerseitigen Sicherheitsrichtlinie 201 werden für das Laden bzw. die Ausführung der Ablaufsteuerungskomponenten 131-133 verwendete Konfigurationsinformationen erneut gegen die Änderungen vorteilhafterweise geprüft bzw. entsprechend den Änderungen angepasst. Von der Änderung der herstellerseitigen Sicherheitsrichtlinie 201 betroffene Ablaufsteuerungskomponenten werden dementsprechend selektiv gestoppt und mit den erneut geprüften bzw. angepassten Konfigurationsinformationen wieder gestartet.

Entsprechend einer besonders vorteilhaften Ausführungsvariante wird anhand der geprüften bzw. angepassten Konfigurationsinformationen jeweils ein Berechtigungsprofil für einen Zugriff auf die angeforderten Berechtigungen bzw. Ressourcen erstellt oder referenziert. Durch die Berechtigungsprofile werden hinsichtlich der angeforderten Berechtigungen bzw. Ressourcen jeweils zulässige bzw. unzulässige Operationen in der Rechnereinrichtung 100 festgelegt. Hierzu zählen beispielsweise auch Aufrufe über Anwendungsprogrammierschnittstellen. Für eine Referenzierung von vordefinierten Berechtigungsprofilen kann beispielsweise eine entsprechende, dem Orchestrierungssystem 300 zugeordnete Datenbasis vorgesehen werden, in der die vordefinierten Berechtigungsprofile kryptographisch gesichert hinterlegt sind.

## Patentansprüche

1. Verfahren zum Betrieb eines Automatisierungsgeräts, bei dem
- durch eine mit dem Automatisierungsgerät (200) verbundene Rechnereinrichtung (100) Steuerungsanwendungen für das Automatisierungsgerät mittels Ablaufsteuerungskomponenten (131-133) bereitgestellt werden, die in eine auf der Rechnereinrichtung installierte Ablaufsteuerungsumgebung (112) ladbar und dort ausführbar sind, wobei für die Ablaufsteuerungskomponenten jeweils Konfigurationsinformationen (312, 322, 332) vorgegeben sind, die zumindest für die jeweilige Ablaufsteuerungskomponente angeforderte Berechtigungen und/oder Ressourcen umfassen,
- im Automatisierungsgerät eine Sicherheitsrichtlinie (201) gespeichert ist, die nur nach einer erfolgreichen Authentifizierung anhand eines einem Hersteller (1) des Automatisierungsgeräts zugeordneten Berechtigungsnachweises (10) änderbar ist,
- die Konfigurationsinformationen durch die Rechnereinrichtung vor einem Start der jeweiligen Ablaufsteuerungskomponente gegen die Sicherheitsrichtlinie geprüft und/oder entsprechend der Sicherheitsrichtlinie angepasst werden,
- die Ablaufsteuerungskomponenten jeweils entsprechend den geprüften und/oder angepassten Konfigurationsinformationen in die Ablaufsteuerungsumgebung geladen und dort ausgeführt werden.

2. Verfahren nach Anspruch 1,
bei dem anhand der geprüften und/oder angepassten Konfigurationsinformationen jeweils ein Berechtigungsprofil für einen Zugriff auf die angeforderten Berechtigungen und/oder Ressourcen erstellt oder referenziert wird und bei dem durch die Berechtigungsprofile hinsichtlich der angeforderten Berechtigungen und/oder Ressourcen jeweils zulässige und/oder unzulässige Operationen in der Rechnereinrichtung festgelegt werden.

3. Verfahren nach einem der Ansprüche 1 oder 2,
bei dem den Ablaufsteuerungskomponenten ohne Prüfung der jeweiligen Konfigurationsinformationen gegen die im Automatisierungsgerät gespeicherte Sicherheitsrichtlinie zumindest kein Zugriff auf das Automatisierungsgerät und/oder kein Kommunikationsnetz-Zugriff eingeräumt wird.

4. Verfahren nach einem der Ansprüche 1 bis 3,
bei dem die angeforderten Berechtigungen und/oder Ressourcen Dateisystem- und/oder Firewall-Freigaben umfassen.

5. Verfahren nach einem der Ansprüche 1 bis 4,
bei dem die geprüften und/oder angepassten Konfigurationsinformationen jeweils für ein Laden und/oder eine Ausführung der jeweiligen Ablaufsteuerungskomponente verwendet werden.

6. Verfahren nach einem der Ansprüche 1 bis 5,
bei dem die Ablaufsteuerungskomponenten (131-133) innerhalb der Ablaufsteuerungsumgebung (112) isoliert voneinander ablaufen und gemeinsam einen Betriebssystemkern der Rechnereinrichtung (100) nutzen und bei dem die Ablaufsteuerungsumgebung auf einem Betriebssystem (111) der Rechnereinrichtung installiert ist.

7. Verfahren nach Anspruch 6,
bei dem die Ablaufsteuerungskomponenten Software-Container, WebAssembly- oder Java Bytecode sind und bei dem die Ablaufsteuerungsumgebung eine Container-Laufzeitumgebung, eine WebAssembly-Laufzeitumgebung oder eine Java Virtual Machine ist.

8. Verfahren nach einem der Ansprüche 6 oder 7,
bei dem ein einem Betreiber des Automatisierungsgeräts zugeordnetes Orchestrierungssystem (300) ein Anlegen, ein Löschen und/oder eine Änderung der Ablaufsteuerungskomponenten (131-133) erfasst und die Steuerungsanwendungen mit ihrem jeweiligen Ausführungsstatus registriert und bei dem das Anlegen, das Löschen und/oder die Änderung der Ablaufsteuerungskomponenten jeweils ein Allokieren oder Freigeben von Ressourcen der Rechnereinrichtung (100) umfasst.

9. Verfahren nach einem der Ansprüche 1 bis 8,
bei dem mittels der Steuerungsanwendungen Funktionen des Automatisierungsgeräts bereitgestellt und/oder gesteuert werden.

10. Verfahren nach einem der Ansprüche 1 bis 9,
bei dem der dem Hersteller des Automatisierungsgeräts zugeordnete Berechtigungsnachweis zumindest einen kryptographischen Hardware- und/oder Software-Schlüssel umfasst.

11. Verfahren nach einem der Ansprüche 1 bis 10,
bei dem für ein Laden und/oder eine Ausführung von Ablaufsteuerungskomponenten verwendete Konfigurationsinformationen nach einer Änderung der im Automatisierungsgerät gespeicherten Sicherheitsrichtlinie erneut gegen die Änderungen geprüft und/oder entsprechend den Änderungen angepasst werden und bei dem von der Änderung der Sicherheitsrichtlinie betroffene Ablaufsteuerungskomponenten selektiv gestoppt und mit den erneut geprüften und/oder angepassten Konfigurationsinformationen wieder gestartet werden.

12. System zur Durchführung eines Verfahrens nach einem der Ansprüche 1 bis 11 mit
- zumindest einem Automatisierungsgerät (200),
- zumindest einer mit dem Automatisierungsgerät verbundenen Rechnereinrichtung (100),
- einer auf der Rechnereinrichtung installierten Ablaufsteuerungsumgebung (112),
- einer im Automatisierungsgerät gespeicherten Sicherheitsrichtlinie (201), die nur nach einer erfolgreichen Authentifizierung anhand eines einem Hersteller (1) des Automatisierungsgeräts zugeordneten Berechtigungsnachweises (10) änderbar ist,
- wobei Rechnereinrichtung dafür ausgestaltet und eingerichtet ist, Steuerungsanwendungen für das Automatisierungsgerät mittels Ablaufsteuerungskomponenten (131-133) bereitzustellen, die in die Ablaufsteuerungsumgebung ladbar und dort ausführbar sind, wobei für die Ablaufsteuerungskomponenten jeweils Konfigurationsinformationen (312, 322, 332) vorgegeben sind, die zumindest für die jeweilige Ablaufsteuerungskomponente angeforderte Berechtigungen und/oder Ressourcen umfassen,
- wobei die Rechnereinrichtung ferner dafür ausgestaltet und eingerichtet ist, die Konfigurationsinformationen vor einem Start der jeweiligen Ablaufsteuerungskomponente gegen die Sicherheitsrichtlinie zu prüfen und/oder entsprechend der Sicherheitsrichtlinie anzupassen,
- wobei die Rechnereinrichtung ferner dafür ausgestaltet und eingerichtet ist, die Ablaufsteuerungskomponenten jeweils entsprechend den geprüften und/oder angepassten Konfigurationsinformationen in die Ablaufsteuerungsumgebung zu laden und dort auszuführen.

13. Steuerungsprogramm zur Durchführung eines Verfahrens nach einem der Ansprüche 1 bis 11, wobei das Steuerungsprogramm in einen Arbeitsspeicher einer Rechnereinrichtung ladbar sowie durch einen Prozessor der Rechnereinrichtung verarbeitbar ist und zumindest einen Codeabschnitt aufweist, bei dessen Ausführung
- Steuerungsanwendungen für ein mit der Rechnereinrichtung (100) verbundenes Automatisierungsgerät (200) mittels Ablaufsteuerungskomponenten (131-133) bereitgestellt werden, die in eine auf der Rechnereinrichtung installierte Ablaufsteuerungsumgebung (112) ladbar und dort ausführbar sind, wobei für die Ablaufsteuerungskomponenten jeweils Konfigurationsinformationen (312, 322, 332) vorgegeben sind, die zumindest für die jeweilige Ablaufsteuerungskomponente angeforderte Berechtigungen und/oder Ressourcen umfassen,
- die Konfigurationsinformationen durch die Rechnereinrichtung vor einem Start der jeweiligen Ablaufsteuerungskomponente gegen eine im Automatisierungsgerät gespeicherte Sicherheitsrichtlinie (201) geprüft und/oder entsprechend der Sicherheitsrichtlinie angepasst werden, wobei die Sicherheitsrichtlinie nur nach einer erfolgreichen Authentifizierung anhand eines einem Hersteller (1) des Automatisierungsgeräts zugeordneten Berechtigungsnachweises (10) änderbar ist,
- die Ablaufsteuerungskomponenten jeweils entsprechend den geprüften und/oder angepassten Konfigurationsinformationen in die Ablaufsteuerungsumgebung geladen und dort ausgeführt werden,
wenn das Steuerungsprogramm in der Rechnereinrichtung abläuft.
